# EUROPEAN PATENT APPLICATION

(11) **EP 4 765 386 A1**
(43) Date of publication of application: **24.06.2026**
(21) Application number: 25783080.2
(22) Date of filing: 27.03.2025
(51) Int. Cl.: H01M 50/188, H01M 50/184, H01M 50/54, H01M 50/531, H01M 50/534

(54) **BATTERY, BATTERY PACK, AND DEVICE COMPRISING SAME**

(30) Priority: 03.04.2024 KR 20240045368
(71) Applicant: LG Energy Solution, Ltd., Seoul 07335 (KR)
(72) Inventor: KIM, Hyeon Jin, Daejeon 34122 (KR); SONG, Jieun, Daejeon 34122 (KR)
(74) Representative: Goddar, Heinz J.
(86) International application number: PCT/KR2025/095134
(87) International publication number: WO 2025/211904

(57) **Abstract**

A battery according to the present invention comprises: an electrode assembly including a plurality of stacked electrodes, a tab array formed by stacking a plurality of electrode tabs respectively extending from the plurality of electrodes, and a cover member covering the tab array; and an electrode lead electrically connected to the tab array. The cover member may include: an electrode cover part covering at least a partial surface of an electrode arranged at the outermost side among the plurality of stacked electrodes; and a tab cover part extending from the electrode cover part, arranged to face the tab array, and electrically connected to the electrode lead.

## Description

### Technical Field

The present disclosure relates to a battery, a battery pack, and a device including the same.

### Background Art

Since being rechargeable and dischargeable unlike a primary battery, a secondary battery may be applied to various fields such as a digital camera, a mobile phone, a laptop computer, a hybrid vehicle, an electric vehicle, and an aircraft. The secondary battery includes a nickel-cadmium battery, a nickel-metal hydride battery, a nickel-hydrogen battery, or the like, and a lithium-ion battery is widely used recently.

In a case of a conventional lithium-ion battery, with respect to a negative electrode and a positive electrode, copper, aluminum foil, or the like has been used as a current collector, and a negative electrode active material or a positive electrode active material has been laminated on both surfaces thereof, so that the negative electrode or the positive electrode has been manufactured.

In contrast, in a case of a lithium-sulfur (Li-S) battery or a lithium metal (Li-metal) battery that is a next generation battery, a negative electrode may be formed of a lithium metal itself. In this case, the lithium metal which forms a negative electrode plate may continue to be extended, so that a negative electrode tab may be formed. However, the lithium metal is a metal having a lowest density and has a soft characteristic, and there is concern over a change in quality during long-term storage due to high reactivity with moisture in air.

An electrode tab formed of the lithium metal as such has been pressed by pressure in a process of being welded to an electrode lead and adhered to a welding device, or a wire break has occurred at a boundary between an electrode and the electrode tab during use of the battery because of the soft characteristic even if welding is completed.

### Detailed Description of the Invention

### Technical Goals

The present disclosure is proposed in consideration of the above-described difficulty, and the goal is to provide a battery configured to prevent an electrode tab from being pressed by pressure in a welding process and adhering to a welding device, a battery pack, and a device including the same.

In addition, the present disclosure provides a battery configured to minimize occurrence of a wire break at a boundary between an electrode and an electrode tab, a battery pack, and a device including the same.

### Technical solutions

According to an aspect of the present disclosure, there is provided a battery including an electrode assembly including a plurality of stacked electrodes, a tab assembly formed by stacking a plurality of electrode tabs respectively extending from the plurality of electrodes, and a cover member configured to cover the tab assembly, and an electrode lead electrically connected to the tab assembly, and the cover member includes an electrode cover part configured to cover at least a portion of a surface of an electrode disposed at an outermost side among the plurality of stacked electrodes, and a tab cover part extended from the electrode cover part, disposed to face the tab assembly, and electrically connected to the electrode lead.

The tab assembly may be formed as the plurality of electrode tabs is stacked in one direction, and the cover member may be configured to cover each of two electrode tabs positioned at one outermost side and another outermost side of the tab assembly.

The tab assembly may be electrically connected to the electrode lead through the tab cover part.

The electrode cover part may be formed of a material having tensile strength higher than that of the plurality of electrode tabs.

The plurality of electrode tabs may be formed of a lithium metal, and the cover member may be nickel foil or copper foil.

The electrode cover part may be configured to cover all of the surface of the electrode disposed at the outermost side among the plurality of stacked electrodes.

The electrode cover part may be bonded to the surface of the electrode disposed at the outermost side among the plurality of stacked electrodes.

A width of the tab cover part may be wider than a width of the tab assembly.

The tab cover part may be disposed between the electrode lead and the tab assembly to be welded to the electrode lead.

According to another aspect of the present disclosure, there is also provided a battery pack including the battery of the present disclosure.

According to still another aspect of the present disclosure, there is also provided a device including the battery pack of the present disclosure.

### Effects of the Invention

According to an aspect of the present disclosure, it is possible to prevent a tab from being pressed by pressure and adhering to a welding device in a welding process.

According to another aspect of the present disclosure, since a cover member covers a tab assembly, it is possible to prevent a reduction in quality of sealing of a battery case, which is caused as the tab assembly is spread by the pressure applied in the welding process, pulled toward an outside of a cover area covered by a tab cover part, and interferes with a lead film, and an electrical short circuit between the tab assembly and the battery case.

According to still another aspect of the present disclosure, it is possible to minimize a wire break at a boundary between an electrode and an electrode tab.

### Brief Description of Drawings

FIG. 1 is an exploded perspective diagram illustrating a battery according to an example embodiment of the present disclosure.
FIG. 2 is a portion of a plan diagram illustrating a battery according to an example embodiment of the present disclosure.
FIG. 3 is a diagram illustrating a plurality of electrodes and a cover member included in a battery according to an example embodiment of the present disclosure.
FIG. 4 is an example cross-sectional diagram according to section A-A' of FIG. 3.
FIG. 5 is a diagram illustrating a cover member included in a battery according to an example embodiment of the present disclosure.
FIG. 6 is a diagram illustrating a cover member included in a battery according to another example embodiment of the present disclosure.
FIGS. 7 and 8 are diagrams illustrating a device according to an example embodiments of the present disclosure.

### Mode for Carrying Out the Invention

Before the present disclosure is described, terms or words used in the present disclosure and the accompanying claims are not to be limited to general definitions or dictionary definitions. The terms and words are to be construed under a principle that an inventor may appropriately define a concept of a term in order to describe their invention in the best way. Thus, since example embodiments described in the present disclosure and configurations illustrated in the accompanying drawings are merely most desirable example embodiments and do not represent all of the technical spirit of the present disclosure, it should be understood that various equivalents and modifications that may replace the example embodiments and configurations may be present at the time of filing the application of the present disclosure.

The same reference numerals or symbols illustrated in the accompanying drawings represent components or elements performing substantially identical functions. For convenience for description and understanding, example embodiments different from each other may be described with the same reference numerals or symbols. In other words, although a plurality of drawings illustrates elements having the same reference numeral, the plurality of drawings does not mean only one example embodiment.

In the following descriptions, terms in a singular form include terms in a plural form unless an apparently and contextually conflicting description is present. Terms such as "including" or "comprising" is to indicate that a feature, a number, an operation, an action, an element, a component, or a combination thereof is present. It should be understood that the terms are not to exclude in advance a possibility that one or more other features, numbers, operations, actions, elements, components, or combinations thereof may be present or added.

In addition, it should be noted in advance that an expression such as an upper side, an upper portion, a lower side, a lower portion, a side surface, a front surface, or a rear surface is based on directions illustrated in the drawings and that the expression may be changed when a direction of a corresponding object is changed.

Terms including an ordinal number such as "first" or "second" used in the present specification and claims may be used to distinguish elements. Such an ordinal number is used to contextually distinguish identical or similar elements from each other. Meanings of the terms may not be limited by use of the ordinal number. For example, a use order, a disposition order, or the like of elements with such an ordinal number may not be limitedly construed by the number. As required, ordinal numbers may be substituted with each other.

Hereinafter, the example embodiments of the present disclosure will be described with reference to the accompanying drawings. However, the idea of the present disclosure is not limited to the proposed example embodiments. For example, those skilled in the art who understand the idea of the present disclosure may propose another example embodiment included in the scope of the idea of the present disclosure through addition, change, removal, or the like of an element. However, the other example embodiment is also included in the scope of the idea of the present disclosure. Shapes, sizes, or the like of elements in the drawings may be exaggerated for clearer description.

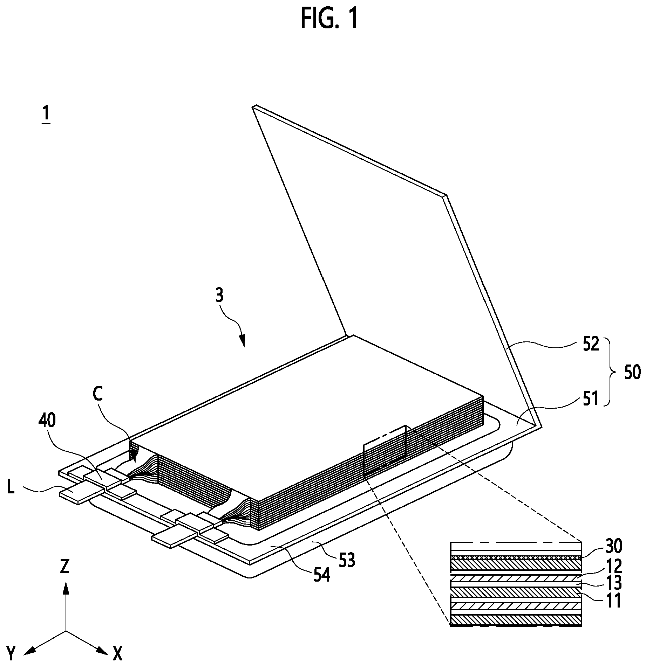

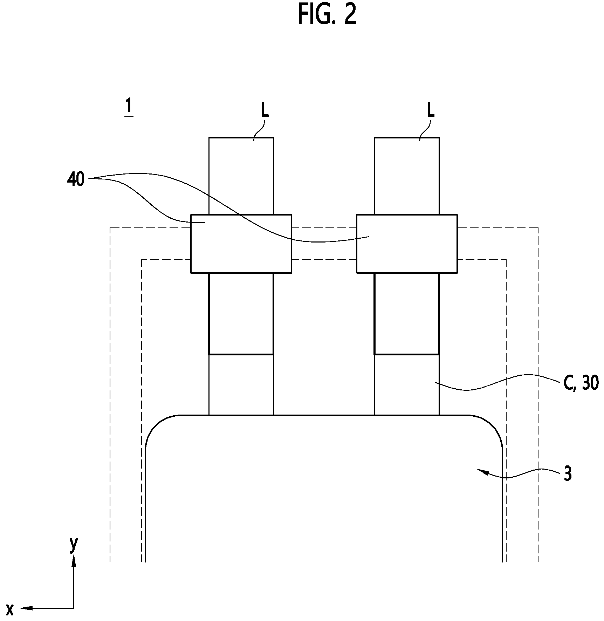

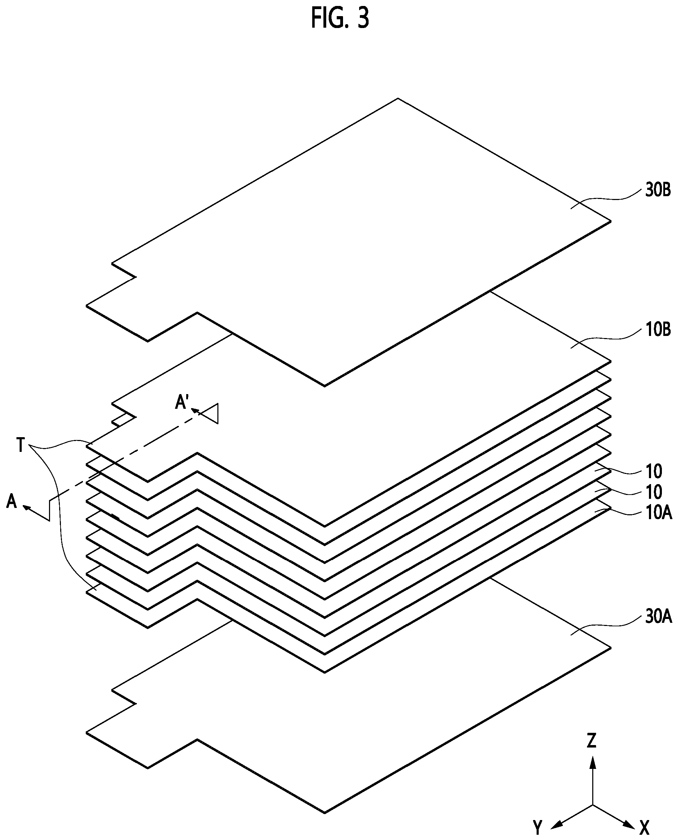

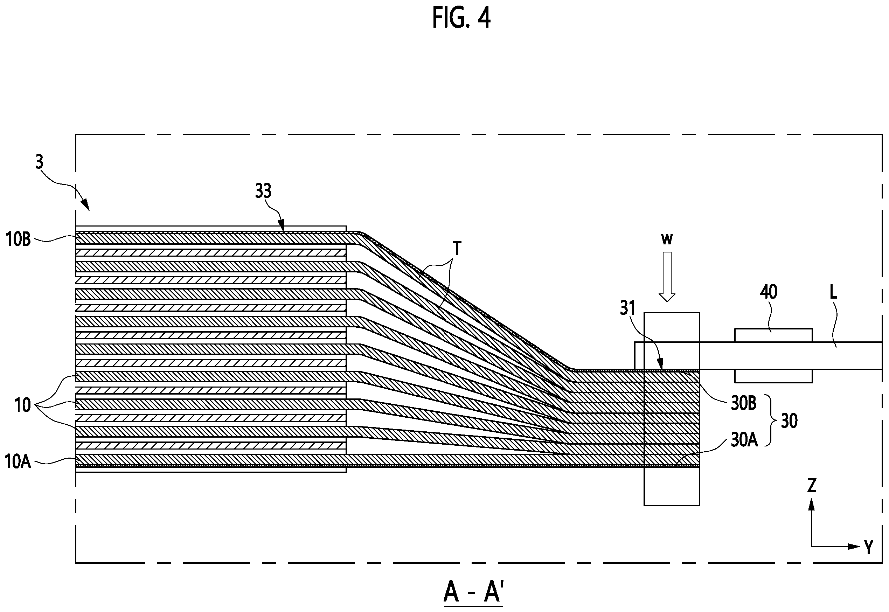

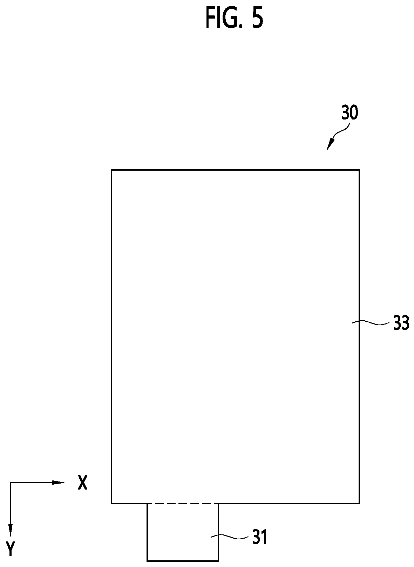

FIG. 1 is an exploded perspective diagram illustrating a battery 1 according to an example embodiment of the present disclosure. FIG. 2 is a portion of a plan diagram illustrating the battery 1 according to an example embodiment of the present disclosure. FIG. 3 is a diagram illustrating a plurality of electrodes 10 and a cover member 30 included in the battery 1 according to an example embodiment of the present disclosure. FIG. 4 is an example cross-sectional diagram according to section A-A' of FIG. 3. FIG. 5 is a diagram illustrating the cover member 30 included in the battery 1 according to an example embodiment of the present disclosure.

Referring to FIGS. 1 through 5, the battery 1 according to the present disclosure may include an electrode assembly 3, an electrode lead L, a battery case 50, and a lead film 40.

The electrode assembly 3 may include the plurality of electrodes 10, a tab assembly C, and the cover member 30.

The plurality of electrodes 10 may be stacked. The plurality of electrodes 10 may include a first electrode 11 and a second electrode 12. The first electrode 11 and the second electrode 12 may have polarities opposite to each other. The first electrode 11 and the second electrode 12 may be stacked with a separator 13 in between.

The separator 13 may be interposed between the first electrode 11 and the second electrode 12 to prevent an electrical short circuit of the first electrode 11 and the second electrode 12 and may be configured to be impregnated with an electrolyte so that an ion may pass through. The separator 13 may be formed of a porous polymer film, nonwoven fabric, or the like. However, a material generally used for a lithium secondary battery other than the above-describe material may be used as a material of the separator 13 without particular limitation.

The tab assembly C may be formed as a plurality of electrode tabs T individually formed and extended from the plurality of electrodes 10 is stacked. The tab assembly C may be formed as the plurality of electrode tabs T is stacked in one direction. The tab assembly C may be formed as the plurality of electrode tabs T which has an identical polarity is gathered.

The electrode lead L may be electrically connected to the tab assembly C. The electrode lead L may be formed of a conductive metallic material. For example, the electrode lead L may be manufactured of nickel (Ni), aluminum (Al), copper (Cu), iron (Fe), or an alloy including such metals. As an example, the electrode lead L may be coupled to the tab assembly C by welding or the like with the cover member 30 interposed in between. A pair of electrode leads L may be provided at a side as illustrated in FIG. 1, but in contrast, the electrode lead L may be provided at each of both sides.

The battery case 50 may be configured to receive the electrode assembly 3. The battery case 50 may be configured so that the electrode lead L is pulled toward an outside of the battery case 50. The battery case 50 may include an upper case 52 and a lower case 51. The battery case 50 may include an electrode receiving part 53 and a sealing part 54 disposed along an edge of the electrode receiving part 53. The electrode receiving part 53 may be formed by vertically combining the upper case 52 and the lower case 51 and may have an inner space that receives the electrode assembly 3. The sealing part 54 may be formed as edges of the upper case 52 and the lower case 51 are pressed or thermally fused along the edge of the electrode receiving part 53, so that an inflow of a foreign substance or moisture outside the case 50 to the electrode assembly 3 received in the electrode receiving part 53 may be blocked.

The battery case 50 may be a pouch-type case manufactured of a soft material. For example, the battery case 50 may be formed with an aluminum laminate sheet. However, the battery case 50 may be formed as a can-type (or rectangular) case or a cylindrical case formed of a metallic material such as aluminum in addition to the above-described pouch-type case.

The lead film 40 may be provided between the battery case 50 and the electrode lead L. The lead film 40 may be provided as a film having thermal fusibility so that a sealing ability of the battery case 50 at an area at which the electrode lead L is pulled outward. In order to prevent a short circuit in the electrode lead L, the lead film 40 may be formed to include an insulating material.

The cover member 30 may cover the tab assembly C. The cover member 30 may cover each of two electrode tabs positioned at outermost sides of the tab assembly C. The cover member 30 may cover each of two electrodes positioned at outermost sides of the plurality of stacked electrodes 10.

Referring to FIGS. 3 and 5 together, the cover member 30 may include an upper cover member 30B that covers an electrode 10B positioned at an upper side (in a positive direction of extension of a Z-axis) among the outermost sides of the plurality of stacked electrodes 10 and a tab T formed and extended from the electrode and include a lower cover member 30A that covers an electrode 10A positioned at a lower side (in a negative direction of the extension of the Z-axis) among the outermost sides of the plurality of stacked electrodes 10 and a tab T formed and extended from the electrode.

The cover member 30 may include an electrode cover part 33 that covers at least a portion of a surface of the electrode 10A or 10B which is positioned at an outermost side of the plurality of stacked electrodes 10 and include a tab cover part 31 extended from the electrode cover part 33, disposed to face the tab assembly C, and electrically connected to the electrode lead L. Electrodes of the plurality of electrodes 10 which is illustrated in FIG. 3 are electrodes having an identical polarity. An electrode having an opposite polarity, which forms the electrode assembly 3 along therewith, has been omitted in the drawings. For example, the electrode having the opposite polarity may be disposed between the plurality of electrodes 10 illustrated in FIG. 3.

The tab cover part 31 of the cover member 30 may be disposed to face the tab assembly C. The tab cover part 31 may cover a surface of the tab assembly C.

The electrode cover part 33 may be disposed to face the electrode 10A or 10B which is disposed at the outermost side of the plurality of stacked electrodes 10.

The cover member 30 may be formed of a material having tensile strength higher than that of a material forming the tab assembly C. For example, when an individual electrode tab T forming the tab assembly C is formed of a lithium metal, the cover member 30 may be nickel foil or copper foil having tensile strength higher that of the lithium metal. The cover member 30 may be formed of an alloy or a metal other than a lithium metal itself. In other words, the cover member 30 may be a metal having materiality stronger than that of a lithium metal.

The cover member 30 may include the tab cover part 31 and the electrode cover part 33 to cover boundaries of an electrode 10 and the electrode tab T.

As illustrated in FIGS. 2 and 4, the tab cover part 31 of the cover member 30 may be coupled to the electrode lead L by ultrasonic welding W in an area in which the electrode lead L and the tab assembly C overlap along a height direction (namely, a direction parallel to the Z-axis). Accordingly, the tab assembly C may be electrically connected to the electrode lead L through the tab cover part 31.

According to such configuration of the present disclosure, the electrode tab T may be prevented from being pressed by pressure and adhering to a welding device in a welding process. As the cover member 30 is provided at an outermost side of the tab assembly C, when ultrasonic welding to connect the electrode L and the tab assembly C is performed, the electrode tab T may not be in contact with a horn and an anvil for the ultrasonic welding. Thus, the tab assembly C is provided between a pair of cover members 30 covering an upper surface and a lower surface of the tab assembly C and is connected to the electrode lead L in a state of not being in contact with the welding device.

In addition, since the cover member 30 covers the tab assembly C, a reduction in quality of sealing of the battery case 50, which is caused as the tab assembly C is spread by the pressure applied in the welding process, pulled toward an outside of a cover area covered by the tab cover part 31, and interferes with the lead film 40, may be prevented, and an electrical short circuit between the tab assembly C and the battery case 50 may be prevented.

Also, a wire break at a boundary between the electrode 10 and the electrode tab T may be minimized. As being a structure of which a width is rapidly decreased, a portion at which the electrode tab T is extended from the electrode 10 may be structurally weak. Such a structure may be prone to a wire break while the battery 1 repeats swelling and shrinking due to swelling of the battery 1 during use. Particularly, compared to an electrode positioned at an inward side, the electrode 10A or 10B positioned at the outermost side of the plurality of stacked electrodes 10 may have a great structural change due to swelling. Thus, the cover member 30 may be disposed to face the electrode 10A or 10B positioned at the outermost side, so that the wire break at the boundary between the electrode 10 and the electrode tab T may be minimized.

The above-described effect may be maximized when the battery 1 according to the present disclosure is a lithium metal battery or a lithium-sulfur battery. A negative electrode plate of the lithium metal battery or the lithium-sulfur battery may have an integral structure formed with a lithium metal sheet. The lithium metal sheet is a planar member formed of lithium or a lithium alloy material, and a negative electrode tab may be implemented by appropriately processing a shape of the lithium metal sheet. Thus, when the battery 1 is the lithium metal battery or the lithium-sulfur battery, the plurality of electrode tabs T which is included in the battery 1 may include a lithium metal (e.g., lithium or an alloy including lithium).

When the negative electrode plate is formed with the lithium metal sheet as such, due to soft materiality of the lithium metal, adhesion of the electrode tab T to the welding device or the wire break at the boundary between the electrode 10 and the electrode tab T may be further intensified. However, as described above, such a difficulty may be minimized by providing, at the outermost side of the tab assembly C which includes the lithium metal, the cover member 30 of a metallic material having materiality stronger than that of the lithium metal.

Particularly, when tensile strength of a coupled body in which the tab assembly C including the lithium metal and the electrode lead L are coupled has been measured, the tensile strength has been measured to be low because a portion near which the electrode 10 is formed and extended to the electrode tab T breaks earlier before a region of coupling of the tab assembly C and the electrode lead L is decoupled. Such a difficulty may be solved by providing, at the outermost side of the tab assembly C, the cover member 30 of the metallic material having the materiality stronger than that of the lithium metal, so that the tensile strength of the coupled body in which the tab assembly C and the electrode lead L are coupled may be improved.

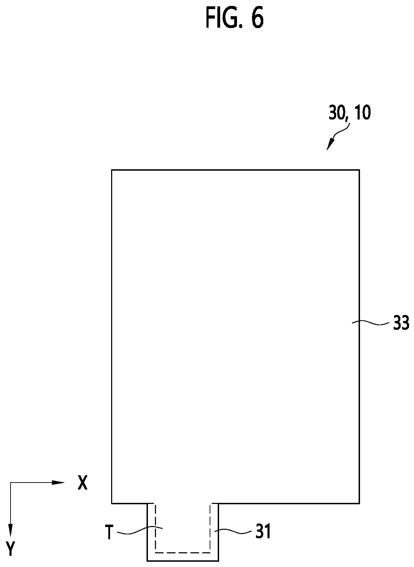

FIG. 6 is a diagram illustrating the cover member 30 included in the battery 1 according to another example embodiment of the present disclosure.

The cover member 30 according to the present disclosure will be described in further detail with reference to FIG. 6.

The electrode cover part 33 may be disposed to all of a surface of the electrode 10A or 10B which is disposed at an outermost side of the plurality of stacked electrodes 10. The electrode cover part 33 may have an area equal to that of a surface of the electrode 10.

The electrode cover part 33 may be bonded to the electrode 10A or 10B which is disposed at the outermost side of the plurality of stacked electrodes 10. The electrode cover part 33 may be bonded to the surface of the electrode 10 by ultrasonic welding or laser welding. The electrode cover part 33 may bonded to the surface of the electrode 10 by a polymer binder.

A process of bonding the electrode cover part 33 to the surface of the electrode 10 may be performed earlier than a process of stacking a plurality of electrodes. In other words, the electrode 10A or 10B to be positioned at the outermost side may be stacked in a state in which the electrode cover part 33 is bonded thereto. Such a stacking scheme may be used without particular limitation when the stacking scheme is generally used for a lithium secondary battery in addition to a zig-zag scheme, a stack & folding scheme, or the like.

The tab cover part 31 may cover an area wider than that of the tab assembly C. The tab cover part 31 may have a width wider than that of the tab assembly C. The tab cover part 31 may have a length longer than that of the tab assembly C.

The tab assembly C and the electrode lead L may be welded along a width direction of the tab T (namely, a direction parallel to an X-axis) with the tab cover part 31 interposed in between. In a process of the welding, the tab assembly C may be spread along the width direction of the electrode tab T (namely, the direction parallel to the X-axis) by pressure applied in a welding process and may be pulled toward an outside a cover area of the tab cover part 31. Thus, setting the width of the tab cover part 31 for prevention thereof is greatly important.

The width of the tab cover part 31 may be associated with a thickness of the tab assembly C, a thickness of the electrode lead L, and a thickness of the cover member 30. For example, when the thickness of the tab assembly is large, since a degree to which the tab assembly C is spread by the pressure applied in the welding process may be large, the width of the tab cover part 31 may be set to be large.

Thus, the width of the tab cover part 31 may be proportional to a sum of the thickness of the tab assembly C, the thickness of the electrode lead L, and thicknesses of two cover members 30 facing each other. For example, an interval at one side along the width direction (namely, the direction parallel to the X-axis) between the tab cover part 31 and the electrode tab T may be set to 0.2 to 0.4 times the sum of the thickness of the tab assembly C, the thickness of the electrode lead L, and thicknesses of two cover members 30 facing each other. The interval at the one side along the width direction (namely, the direction parallel to the X-axis) between the tab cover part 31 and the electrode tab T may be 1 to 2 millimeters (mm). An interval at another side along the width direction (namely, the direction parallel to the X-axis) between the tab cover part 31 and the electrode tab T may be set to be equal to the interval at the one side, so that the tab assembly C may be positioned at a center of the tab cover part 31 along the width direction.

According to such configuration, when the tab cover part 31 is coupled between the electrode lead L and the tab assembly C by welding, an effect which prevents the tab assembly C from being spread by the pressure applied in the welding process and pulled toward the outside of the cover area of the tab cover part 31 to interfere with the lead film 40 or adhere to a welding device may be greatly increased.

A process in which the tab cover part 31 is coupled between the electrode lead L and the tab assembly C by the welding may be performed after a process of stacking the plurality of electrodes 10. After the process in which the tab cover part 31 is coupled between the electrode lead L and the tab assembly C by the welding, a process of surrounding the electrode assembly 3 with the separator 13 once more, a process of receiving the electrode assembly 3 in the battery case 50, and/or a process of sealing the battery case 50 may be included.

Meanwhile, although not illustrated in detail, a battery pack according to the present disclosure may include one or more batteries 1 according to the present disclosure. The battery pack may further include other various elements in addition to the battery 1, for example, an element or the like of the battery pack, which has been publicly known at a time point of filling an application of the present disclosure, such as a battery management system (BMS), a busbar, a pack case, a relay, or a current sensor.

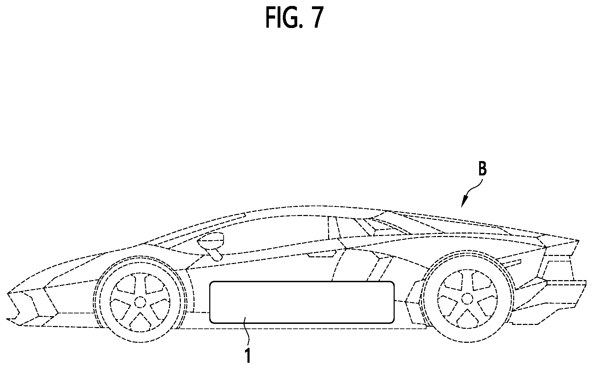

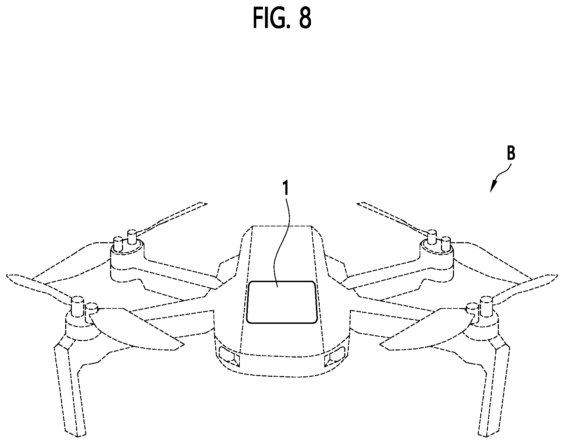

FIGS. 7 and 8 are diagrams illustrating a device B according to an example embodiments of the present disclosure.

Referring to FIGS. 7 and 8, the device B according to the present disclosure may include the battery 1 according to an example embodiment of the present disclosure. For example, a device illustrated in FIG. 7 may be a vehicle, and a device illustrated in FIG. 8 may be an aircraft.

Referring to FIG. 7, when the device B according to the present disclosure is a vehicle, the vehicle may further include various elements included in a vehicle in addition to the battery 1. For example, the vehicle may further include a vehicle body, a motor, a control device such as an electronic control unit (ECU), or the like in addition to the battery 1 according to the present disclosure.

Referring to FIG. 8, when the device B according to the present disclosure is an aircraft, the aircraft may further include various elements included in an aircraft in addition to the battery 1. For example, when the aircraft is a drone, the drone may further include a transmitter/adjuster, a motor, a propeller, a control board, or the like in addition to the battery 1 according to the present disclosure.

However, the device B is not limited to transportation such as the vehicle and the aircraft as described above and may be applied to various types of devices that may use the battery 1, including an energy storage system (ESS).

As described above, desired example embodiments of the present disclosure are mainly described with reference the accompanying drawings, but it is apparent to those skilled in the art that various modifications are allowed without deviating from the category of the present disclosure. Thus, the category of the present disclosure should be construed based on the claims described to include examples of such modifications.

### [Description of Reference Numerals]

B Device
1 Battery
3 Electrode assembly
10 Electrode
11 First electrode
12 Second electrode
13 Separator
T Electrode tab
C Tab assembly
L Electrode lead
30 Cover member
31 Tab cover part
33 Electrode assembly
40 Lead film
50 Battery case
51 Lower case
52 Upper case
53 Electrode receiving part
54 Sealing part

## Claims

1. A battery comprising:
an electrode assembly comprising a plurality of stacked electrodes, a tab assembly formed by stacking a plurality of electrode tabs respectively extending from the plurality of electrodes, and a cover member configured to cover the tab assembly; and
an electrode lead electrically connected to the tab assembly,
wherein the cover member comprises:
an electrode cover part configured to cover at least a portion of a surface of an electrode disposed at an outermost side among the plurality of stacked electrodes; and
a tab cover part extended from the electrode cover part, disposed to face the tab assembly, and electrically connected to the electrode lead.

2. The battery of claim 1, wherein the tab assembly is formed as the plurality of electrode tabs is stacked in one direction, and
the cover member is configured to cover each of two electrode tabs positioned at one outermost side and another outermost side of the tab assembly.

3. The battery of claim 1, wherein the tab assembly is electrically connected to the electrode lead through the tab cover part.

4. The battery of claim 1, wherein the electrode cover part is formed of a material having tensile strength higher than that of the plurality of electrode tabs.

5. The battery of claim 1, wherein the plurality of electrode tabs is formed of a lithium metal, and
the cover member is nickel foil or copper foil.

6. The battery of claim 1, wherein the electrode cover part is configured to cover all of the surface of the electrode disposed at the outermost side among the plurality of stacked electrodes.

7. The battery of claim 6, wherein the electrode cover part is bonded to the surface of the electrode disposed at the outermost side among the plurality of stacked electrodes.

8. The battery of claim 6, wherein a width of the tab cover part is wider than a width of the tab assembly.

9. The battery of claim 6, wherein the tab cover part is disposed between the electrode lead and the tab assembly to be welded to the electrode lead.

10. A battery pack comprising the battery of any one of claims 1 to 9.

11. A device comprising the battery pack of claim 10.
